# EUROPEAN PATENT SPECIFICATION

(11) **EP 2 081 166 B1**
(45) Date of publication and mention of the grant of the patent: **24.03.2010**
(21) Application number: 09159702.1
(22) Date of filing: 30.05.2006
(51) Int. Cl.: G08G 1/09

(54) **Message data structure for traffic information including composite links**
Datenformat für Verkehrsinformation einschließlich zusammengesetzter Verbindungen
Format de données pour des informations de trafic y compris des liens composés

(30) Priority: 01.06.2005 US 685889; 25.10.2005 KR 20050100822
(43) Date of publication of application: 22.07.2009
(62) Divisional of application: 06747475.9
(73) Proprietor: LG Electronics Inc., Seoul 150-721 (KR)
(72) Inventor: Jung, Mun Ho, 137-130 Seoul (KR); Kim, Young In, 137-130 Seoul (KR)
(74) Representative: Cabinet Plasseraud

(56) References cited:
- EP-A- 1 041 755
- EP-A- 1 079 353
- US-A1- 2001 028 314

## Description

### 1. TECHNICAL FIELD

The present document relates to providing traffic information including composite link and using the provided traffic information.

### 2. BACKGROUND ART

With the advancement in digital signal processing and communication technologies, radio and TV broadcasts are in the process of being digitalized. Digital broadcast can provide various information (e.g., news, stock, weather, traffic information, etc) as well as audio and video contents.

One such use for digital broadcasts is to satisfy an existing demand for traffic information. Proposals that involve the use of digital broadcasts for this purpose contemplate the use of standardized formatting of traffic information to be broadcast. This approach may be used to enable the use of traffic information receiving terminals made by different manufacturers, which each could be configured to detect and interpret traffic information broadcast in the same way.

Documents US 2001/028 314 and EP 1 041 755 describe existing data structure for traffic information.

### 3. DISCLOSURE OF INVENTION

The present invention relates to a message data structure according to claim 1.

Advantageous embodiments of the invention are defined in the dependent claims.

### 4. DESCRIPTION OF GENERAL ASPECTS OF THE INVENTION

First general aspects of a method for processing traffic information including composite links s shall be described in what follows. The method includes receiving traffic information including a composite identifier enabling a determination of whether the received traffic information includes composite link information corresponding to a composite link that includes at least first and second links, and at least first and second link identifiers respectively corresponding to the first and second links. The method also includes determining, based on the composite identifier, whether the received traffic information includes composite link information and dependent upon whether the composite identifier enables a determination that the received traffic information includes composite link information, identifying the composite link among the received traffic data based on at least the first and second link identifiers.

Implementations may include one or more additional features. For instance, the method may include receiving an indicator of a number of links included in the composite link. The number of links included in the composite link may correspond to a number of link identifiers indicated by the received traffic information. When the indicator of the number of links included in the composite link is three, the received traffic information may correspondingly include a third link identifier in addition to the first and second link identifiers. Receiving composite link information may include receiving vertex, coordinate, or longitude and latitude information that corresponds with a location associated with the composite link or links included within the composite link. Receiving composite link information may include receiving location information corresponding to each of the first and second link identifiers. Receiving composite link information may include receiving a text descriptor associated with the composite link.

The method may also include receiving an indicator of a number of links included in the composite link. The number of links included in the composite link may correspond to a number of link identifiers indicated by the received traffic information. When the indicator of the number of links included in the composite link is three, the received traffic information may correspondingly include a third link identifier in addition to the first and second link identifiers.

The method may further include receiving a composite traffic status indicator revealing traffic status information, identifying the received composite traffic status indicator as composite traffic status information for the composite link, and enabling perception of an association between the received traffic status information and the composite link. Receiving a composite traffic status indicator may include receiving at least one of a predicted or current traffic tendency on the composite link, a predicted or current amount of traffic on the composite link, a predicted or current speed on the composite link, and a predicted or current time to traverse the composite link. Information corresponding to a message management structure including information corresponding to a generation time of the composite link information included in the message management structure may be received. The generation time included within the received message management structure may relate to the composite traffic status indicator corresponding to at least one of a predicted or current traffic tendency on the composite link, a predicted or current amount of traffic on the composite link, a predicted or current speed on the composite link, and a predicted or current time to traverse the composite link. The composite link information may be associated with a received composite traffic status indicator. The composite traffic status indicator may correspond to the status of the composite link or links included within the composite link. The received composite traffic status indicator may enable determination of traffic status information for only a single direction of travel along the composite link.

Also in the method, after the traffic information has been received and processed to determine that the composite traffic status information is associated with at least the first and second links within the composite link, the method may further include receiving supplemental traffic information that includes a supplemental composite link information identifier that enables determination that the supplemental traffic information includes supplemental composite link information, information identifying the composite link as the link to which the supplemental composite link information relates, and an identifier of at least one additional link to be included in the composite link and associated with traffic status information received for the composite link. This implementation may include determining, based on the supplemental composite link identifier, whether the received supplemental traffic information includes supplemental composite link information, and dependent upon whether the supplemental composite link identifier enables a determination that the received supplemental traffic information includes supplemental composite link information. This implementation may also include identifying the composite link based on the supplemental traffic data, identifying the additional link based on the received additional link identifier, and redefining the composite link based on as including the additional link.

Further in the method, redefining the composite link may include redefining the composite link as including the additional link, including applying traffic status information received for the composite link to the portion of the composite link corresponding to the additional link. Redefining the composite link may include redefining the composite link as excluding a link corresponding to the additional link, including applying traffic status information received for the composite link to only the portion of the composite link that does not include the additional link. The supplemental traffic information may be received without an indication of the first and second link identifiers.

Also, in the method, the received composite traffic status indicator may enable determination of traffic status information for both directions of travel along the composite link, including receiving supplemental traffic information that includes a supplemental composite link information identifier that enables determination that the supplemental traffic information includes supplemental composite link information, information identifying the composite link as the link to which the supplemental composite link information relates, and a composite travel direction indication that enables a determination of whether to enable or disable access to traffic status information for a direction of travel along the composite link. This implementation may include determining, based on the supplemental composite link identifier, whether the received supplemental traffic information includes supplemental composite link information and dependent upon whether the supplemental composite link identifier enables a determination that the received supplemental traffic information includes supplemental composite link information, identifying the composite link based on the supplemental traffic data, and identifying, based on the composite travel indication, whether to enable or disable access to traffic status information for a direction of travel along the composite link.

Further, in the method, enabling perception of an association between the received traffic status information and the composite link may include enabling perception along a single link of traffic status information for the single link in addition to traffic status information for composite links within which the single link is included.

General aspects of a traffic information communication device configured to process traffic information including composite links shall now be presented. The device includes a data receiving interface configured to receive composite link information, the information including a composite identifier enabling a determination of whether the received traffic information includes composite link information, and at least first and second link identifiers respectively corresponding to the first and second links that are included within the composite link. The device also includes a processing device configured to process information received from the data receiving interface and to determine composite link characteristic information based at least in part on the composite link information received.

Implementations may include one or more additional features. For instance, the data receiving interface may be further configured to receive a composite traffic status indicator revealing traffic status information corresponding to a composite link that includes at least first and second links. The processing device may also be configured to determine, based on the composite identifier, whether the received traffic information includes composite link information. The implementation may also include the processing device configured to dependent upon whether the composite identifier enables a determination that the received traffic information includes composite link information, identify the composite link among the received traffic data based on at least the first and second link identifiers, identify the received composite traffic status indicator as composite traffic status information for the composite link, and enable perception of an association between the received traffic status information and the composite link.

Also, in the device, the data receiving interface may receive a data length. The processing device may use the data length to determine an amount of the received data to attribute to the composite link information. The processing device may be configured to receive a version number corresponding to information within the received composite link information. The version number may be associated with a specific syntax of the data where any one of multiple syntaxes may be used. The data receiving interface may receive an indicator of a number of links included in the composite link. The processing device may be configured to determine a number of links included in the composite link based on the received indicator of the number of links. The data receiving interface may receive and the processing device may process at least one of a predicted or current traffic tendency on the composite link, a predicted or current amount of traffic on the composite link, a predicted or current speed on the composite link, and a predicted or current time to traverse the composite link.

Further, in the device, the data receiving interface may receive, after the traffic information has been received and processed to determine that the composite traffic status information is associated with at least the first and second links within the composite link, supplemental traffic information that includes a supplemental composite link information identifier that enables determination that the supplemental traffic information includes supplemental composite link information, information identifying the composite link as the link to which the supplemental composite link information relates, and an identifier of at least one additional link to be included in the composite link and associated with traffic status information received for the composite link. The processing device may be configured to perform, upon receipt of the supplemental traffic information, the steps of determining, based on the supplemental composite link identifier, whether the received supplemental traffic information includes supplemental composite link information and dependent upon whether the supplemental composite link identifier enables a determination that the received supplemental traffic information includes supplemental composite link information identifying the composite link based on the supplemental traffic data, identifying the additional link based on the received additional link identifier, and redefining the composite link based on as including the additional link.

Also, in the traffic information communication device, the processing device may be configured to redefine the composite link as including the additional link, and to apply traffic status information received for the composite link to the portion of the composite link corresponding to the additional link. The processing device may be configured to redefine the composite link as excluding a link corresponding to the additional link, and to apply traffic status information received for the composite link to only the portion of the composite link that does not include the additional link. The data receiving interface may receive the supplemental traffic information without receiving therewith an indication of the first and second link identifiers.
further, in the following, general aspects of an apparatus for processing traffic information including composite links will be presented. The apparatus includes means for receiving traffic information including a composite identifier enabling a determination of whether the received traffic information includes composite link information corresponding to a composite link that includes at least first and second links, and at least first and second link identifiers respectively corresponding to the first and second links and means for determining, based on the composite identifier, whether the received traffic information includes composite link information. The apparatus also includes means for, dependent upon whether the composite identifier enables a determination that the received traffic information includes composite link information identifying the composite link among the received traffic data based on at least the first and second link identifiers.

The details of one or more implementations of the invention are set forth in the accompanying drawings and the description below. Other features will be apparent from the description and drawings, and from the claims.

### 5. BRIEF DESCRIPTION OF DRAWINGS

FIG. 1 illustrates a schematic diagram of a network through which traffic information is provided;
FIG. 2a illustrates a partial syntax of a component frame including traffic information;
FIG. 2b illustrates a format of a TPEG-CTT message with an emphasis on status components delivering traffic information;
FIG. 2c illustrates a format of a TPEG-CTT message with an emphasis on coordinate components delivering link information;
FIG. 3a illustrates a syntax of a link information component;
FIG. 3b illustrates a format of a TPEG-CTT message with an emphasis on link information components;
FIG. 3c illustrates a format to transmit information on a composite link through coordinate components ;
FIG. 4 illustrates a block diagram of a navigation terminal that receives traffic information transmitted from a server;
FIGS. 5a through 5c illustrate examples of displaying traffic information such as average speed in a link, and a composite link; and
FIG. 6 illustrates an exemplary screen displaying traffic information only for composite links.

### 6. MODES FOR CARRYING OUT THE INVENTION

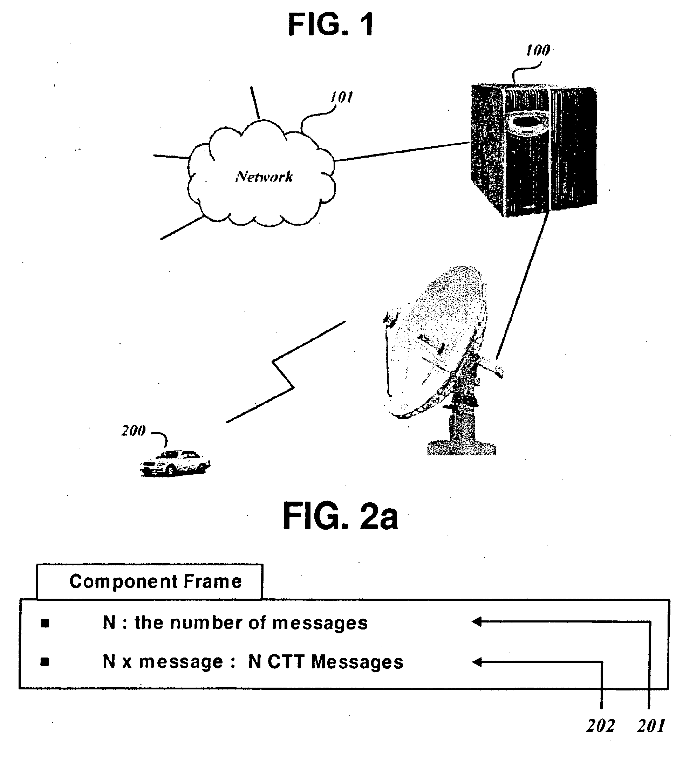

FIG. 1 is a schematic diagram of a network through which traffic information is provided. A traffic information providing server 100 in a broadcast station may transmit traffic information, e.g., traffic congestion information collected from various sources (e.g., operator input, or information received from another server or probe cars through a network 101) wirelessly so that a traffic information receiving terminal (e.g., navigation system installed in a car 200) may receive the traffic information. In the below explanation about implementations, the traffic information means traffic congestion information.

The traffic information wirelessly transmitted from the traffic information providing server 100 may be of the form of a component frame. As shown in FIG. 2a, a component frame may include a field 201 indicative of the number of messages included therein and a sequence of transport protocol expert group messages 202, the number of the messages being equal to the value stored in the field 201. The transport protocol expert group message will be referred to as the TPEG-CTT message hereinafter.

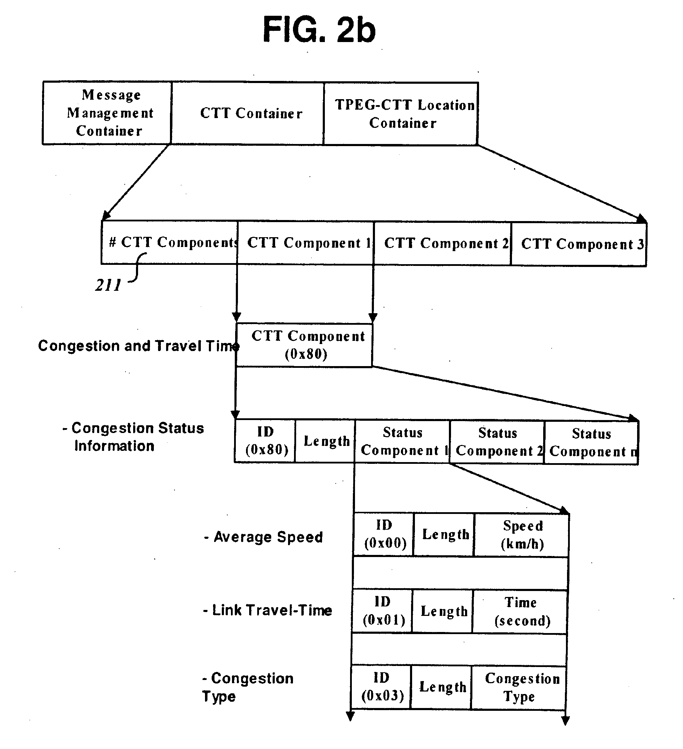

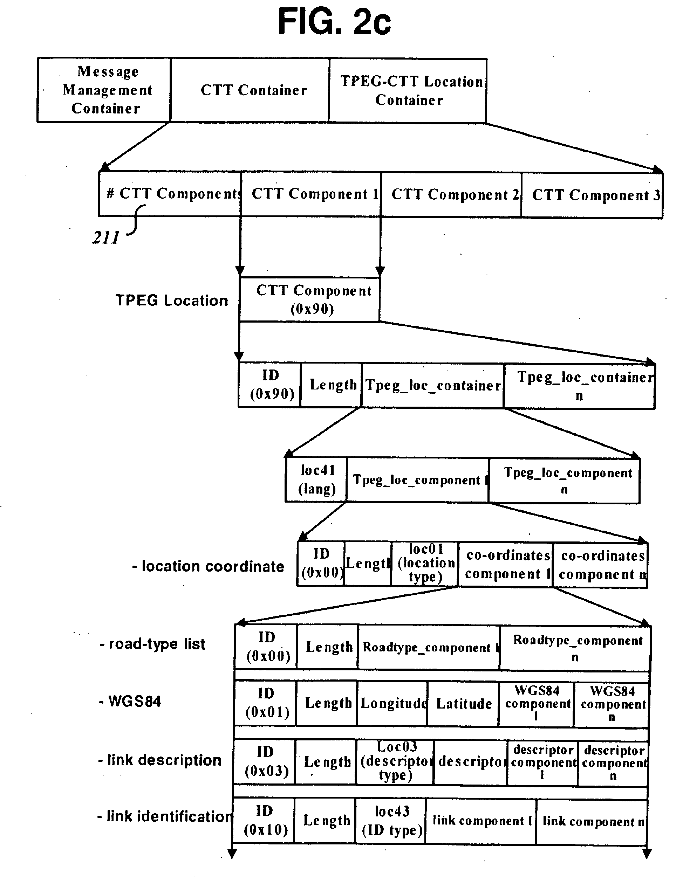

As shown in FIGS. 2b and 2c, one message segment of the sequence 202, i.e., one TPEG-CTT message, may include a message management container including information on date and time, the message occurrence time, etc., a congestion and travel-time information (CTT) container, and a TPEG-CTT location container. The CTT container may include a field 211 indicative of the number of CTT components included in the CTT container and the TPEG-CTT location container. The field 211 may be followed by CTT components, the number of which is equal to the value stored in the field 211.

In various implementations, if a CTT component includes traffic congestion information, the CTT component is given an ID of 0x80, as shown in FIG. 2b, and includes one or more status components therein. Each status component may include an ID indicative of the information included therein. For example, a status component including an ID of 0x00 delivers the average speed in a link (a road unit including no branch therein). A status component including an ID of 0x01 delivers link travel time. A status component including an ID of 0x03 delivers information on the degree or type of congestion. In the description, specific IDs are described as assignments to structures associated with specific information. The actual value of an assigned ID (e.g., 0x80) is exemplary, and different implementations may assign different values for specific associations or circumstances. Thus, the CTT component may be used to provide various different types of data that may be signaled based on an identifier. For example, FIG. 2B illustrates components with identifiers of 0x00 and 0x01 signaling, respectfully, speed and travel-time information.

Further, according to the various implementations if a CTT component includes link location information, the CTT component is given an ID of 0x90 as shown in FIG. 2c and includes one or more TPEG-CTT location sub-containers. Each TPEG-CTT location sub-container 'Tpeg_loc_container' includes one or more TPEG-CTT location components, each of which includes one or more coordinate components having an ID of 0x00. Each coordinate component delivers information on a link or links for which the status component includes traffic information. A link may refer to a road segment which starts and ends at junctions and has no junction in between. A coordinate component including an ID of 0x00 includes information on the link type (e.g., express way, national road, etc). A coordinate component including an ID of 0x01 includes coordinate information which may be expressed in the WGS84 format. A coordinate component including an ID of 0x03 includes link description information and a coordinate component including an ID of 0x10 includes link identification information.

The server 100 may construct the TPEG-CTT information as shown in FIGS. 2a through 2c from traffic information collected from various sources and may transmit the constructed TPEG-CTT information to traffic information receiving terminals wirelessly.

Information may be provided at a macroscopic scale. For example, if there are two or more possible commutation routes (e.g., Olympic highway, 'Gangbyeonbukro' in Seoul), the driver may be likely to choose one route from among the possible routes based on an indication of an average speed along an aggregation of the routes rather than the average speed in each road segment within the routes. If the traffic information receiving terminal is equipped with the function of providing the average speed in principal roads, the driver may make a request for the average speed in a specific principal road. For another example a US user can show the congestion of overall highways briefly from Dulles Airport, VA to Smithsonian Museum, Washington D.C So user can recognize and choose what is good or bad.

To meet the need for traffic information at a macroscopic scale, the server 100, which may collect traffic information in a centralized manner and provide for a terminal, may generate a composite link composed of a plurality of links on a specific road and may provide traffic congestion information for the composite link in a similar manner as traffic congestion information for each link.

A process, according to various implementations, for providing traffic information on a virtual composite link that does not correspond to a single actual link will now be described in detail.

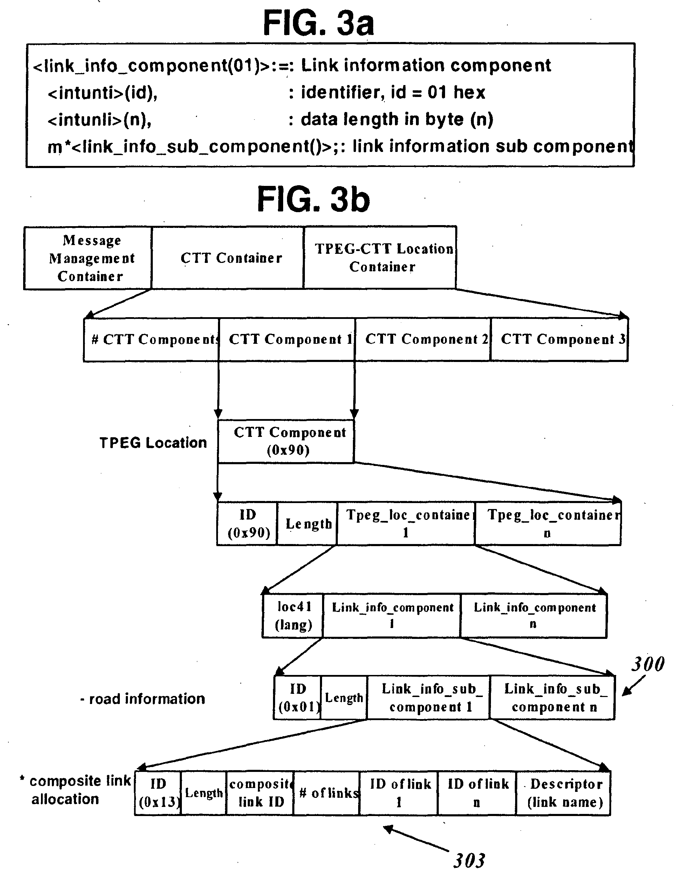

To provide traffic information on a composite link defined from a set of links, the server 100 may construct a link information component including an ID of 0x01 as shown in FIG. 3a and may deliver the link information component via a TPEG-CTT location sub-container. The link information container, as shown in FIG. 3b, may deliver a link allocating sub-component 303 for allocating a composite link comprising successive links via the link information component.

The link allocating sub-component 303 has an ID of 0x02 and may include a composite link ID, the number of links included in the composite link, the IDs of the links included in the composite link, and/or a descriptor. In particular, the link allocating sub-component ID 0x02 is used to trigger recognition of the component as a link allocation sub-component.

The server 100 may construct the TPEG-CTT information as shown in FIGS. 2a through 2c from traffic information collected from various sources and may transmit the constructed TPEG-CTT information to traffic information receiving terminals wirelessly. Under various circumstances, such as, for example, according to operator input or predefined conditions, the server 100 may create the link allocating sub-component 303 for establishing a composite link comprising a plurality of links (e.g., a set of road segments belonging to a principal road) and delivers the link allocating sub-component 303 via the link information component 300. It is possible to make composite links for a principal road in one direction or in both directions. Making a composite link which has a low demand for traffic information in only one direction helps reduce the size of traffic information, simplify server processing, and provide useful information to a user wishing to perceive travel options along an intended direction of travel.

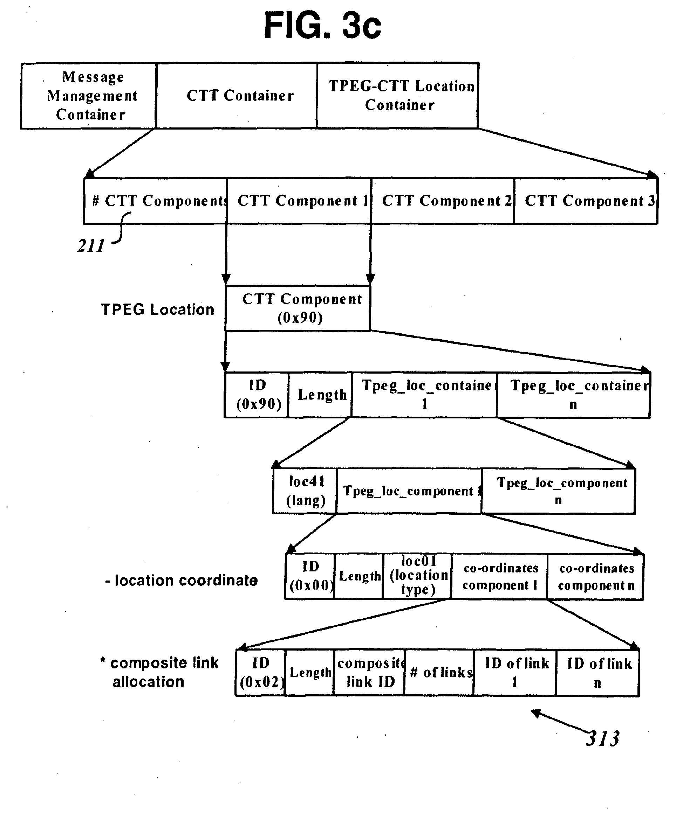

In another implementation, information on allocation of a composite link may be carried by a coordinate component including ID of 0x00, as shown in FIG. 3c. In this case, ID of, for example, 0x13 is allocated to a coordinate component carrying information of a composite link information to distinguish from other coordinate components carrying road-type list, WGS84, link description, and link identification.

In this implementation, information that may be needed for allocating a composite link, for example, information on a composite link description, may be included dispersedly in a description component shown in FIG. 2c.

The server 100 may calculate traffic information (e.g., average speed, link travel time, the degree of congestion, etc) for the composite link based on traffic information for individual links and transmit the traffic information for the composite link in a similar manner to other links. Since the server 100 may have more powerful performance than traffic information receiving terminals equipped with limited resources, it may be faster and more efficient for the server 100 to obtain traffic information for the composite link.

According to various implementations, if there is a change in the set of links included in a composite link, e.g., a link is added to or removed from the composite link, the server 100 may create and transmits a link allocating sub-component (or composite link allocating coordinate component) for reallocating a composite link composed of the changed set of links. In this case, the server 100 may allocate the sub-component an ID, e.g., 0x03 (or 0x14) instead of 0x02 (or 0x13 indicative of a composite link allocating coordinate component) to inform traffic information receiving terminals that a pre-allocated composite link is reallocated.

In order to cancel an existing composite link, the server 100 may create and transmits a link allocating sub-component for canceling the existing composite link. Canceling an existing sub-component may be useful in reducing the size of traffic information. For example, if a road is congested in one direction in the morning and the same road is congested in the opposite direction in the evening, a composite link for the opposite direction may be unlikely to be of high demand in the morning. As a result, the size of traffic information may be reduced by canceling the composite link for the opposite direction in the morning. In this case, the link allocating sub-component has the ID of the existing composite link to be canceled and the information on the number of links set to 0. It is also possible to create a link canceling sub-component including an ID of 0x04 instead of the link allocating sub-component including the ID of the existing composite link and the number of links set to 0, in which case the link canceling sub-component only includes the ID of the composite link to cancel. In another implementation , a composite link canceling coordinate component including ID of, for example, 0x15 indicative of cancellation of a composite link may be provided.

After a composite link is allocated, the traffic information for each of the links included in the composite link may also be provided.

Because a composite link may be treated as an actual link, the data update interval for a composite link may be made equal to the data update interval for individual links. Hence, drivers may be rapidly informed of the traffic conditions on principal roads, each of which may be managed as composite links.

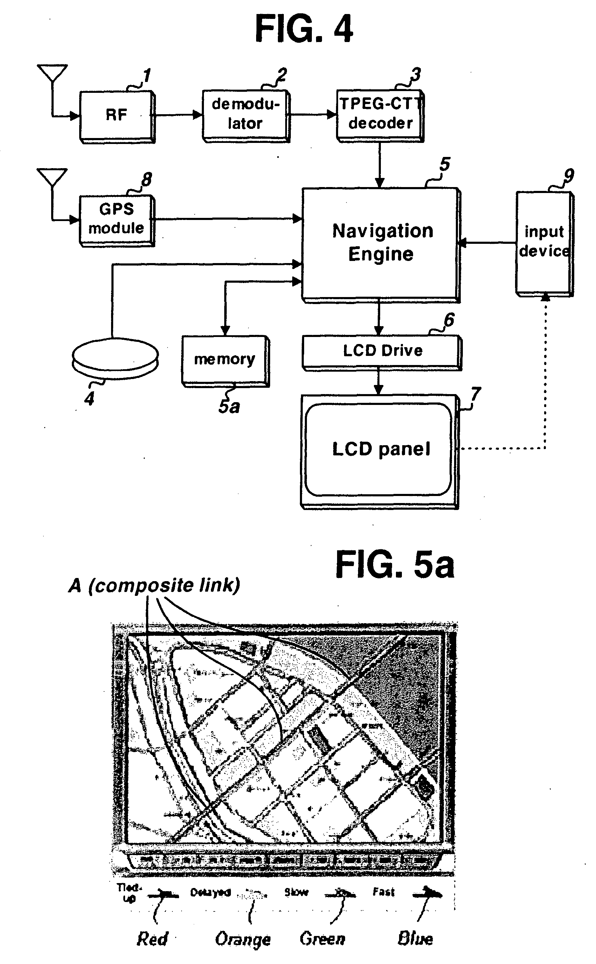

Figs. 4-6 are example implementations of systems for receiving and utilizing traffic information. Other systems may be organized differently or include different components. Specifically, FIG. 4 is an example of a block diagram of a navigation terminal that receives traffic information transmitted from the server 100.

The navigation terminal includes a tuner 1 for receiving modulated traffic information signals by resonating at the required frequency band, a demodulator 2 for outputting traffic information signals by demodulating the modulated signals from the tuner 1, a TPEG-CTT decoder 3 for extracting traffic information by decoding the demodulated traffic information signals, a GPS module 8 for calculating the current position (i.e., latitude, longitude, and altitude) by receiving signals from a plurality of satellites, storage structure 4 for storing various graphic data and an electronic map including information on links and nodes, an input unit 9 for receiving user input, a navigation engine 5 for controlling screen display based on the user input, the current position, and extracted traffic information, a memory 5a for storing data temporarily, an LCD panel 7 for displaying data, and an LCD drive 6 for driving the LCD panel 7 according to data to be presented. The input unit 9 may be a touch screen incorporated into the LCD panel 7.

The tuner 1 tunes to the frequency of the signals transmitted by the server 100 and the demodulator 2 demodulates the tuned signals in a predetermined manner. The TPEG-CTT decoder 3 extracts TPEG-CTT messages, as shown in FIGS. 2a through 2c and FIGS. 3a and 3b (or 3c), and stores the TPEG-CTT messages temporarily. Interpreting the temporarily stored TPEG-CTT messages, the TPEG-CTT decoder 3 sends the extracted information and/or control data to the navigation engine 5. Though various kinds of information are provided for the navigation engine 5 by the TPEG-CTT decoder 3, for purposes of brevity, the following description will focus on the method for allocating composite links and the method for processing traffic information for composite links.

The TPEG-CTT decoder 3 extracts data/time and message occurrence time included in the message management container of each TPEG-CTT message and determines if the following container is a CTT event container based on 'message element' information (i.e. an identifier). If it is determined that the following container is a CTT event container, the TPEG-CTT decoder 3 provides the navigation engine 5 with the information extracted from the CTT component included in the CTT event container so that the navigation engine 5 may display congestion and travel-time information and link information, which will be described below. Providing the navigation engine 5 with the information may include determining, based on identifiers, that the traffic information includes a message management container including status or composite information within various message components within the message management container. The components may each include different status or composite information associated with different links, composite links, or locations and identifiers associated with the different status or composite information. The containers and components may each include information associated with a generation time, version number, data length, and identifiers of included information.

The TPEG-CTT decoder 3 then extracts information on the link location about which the previously extracted information may be created from the following TPEG-CTT location container. The position information may be, for example, the coordinates (i.e., latitudes and longitudes) of the start and end positions or a link ID, depending on the type of the TPEG-CTT location container. If the navigation terminal is equipped with the storage structure 4, the navigation engine 5 finds the link location about which the received information is created with reference to information on each link and node stored in the storage structure 4. The navigation engine 5 may convert the coordinates of the link into the link ID or vice versa.

In the implementation of FIG. 3b, the TPEG-CTT decoder 3 may determine if a link information component including an ID of 0x01 is delivered via a TPEG-CTT location sub-container and if so, extract each sub-component from the link information component.

If the extracted sub-component is a link allocating sub-component (e.g., includes an appropriate identifier), such as including an ID of 0x02 for allocating a composite link, the TPEG-CTT decoder 3 may extract the ID of the composite link to allocate, the number of links included in the composite link, the IDs of the links included in the composite link, and a descriptor (e.g., the road name) and may provide the extracted information for the navigation engine 5 so that the extracted information may be stored as a temporary link entry in the memory 5a. If the extracted sub-component is a link canceling sub-component for canceling an existing composite link or a link allocating sub-component including the number of links set to 0, the TPEG-CTT decoder 3 may make a request for removing a temporary link entry including an ID that is the same as the composite link ID of the sub-component so that the navigation engine 5 may remove the composite link entry from the memory 5a.

In the implementation of FIG. 3c, a composite link allocating coordinate component or a composite link cancellation coordinate component may be extracted from a TPEG-CTT location component including ID of 0x00 included in a TPEG-CTT location sub container, and the above-explained operations may be conducted according to information included in the extracted component.

The navigation engine 5 reads a part of the electronic map centered around the position coordinates received from the GPS module 8 from the storage structure 4 and displays the map on the LCD panel 7 via the LCD drive 6. A particular graphic symbol is displayed at the location corresponding to the current position on the LCD panel 7.

The navigation engine 5 may display the average speed or average travel time in a link received from the TPEG-CTT decoder 3 at a location corresponding to the coordinates or link ID delivered via the TPEG-CTT location container following the container delivering the average speed or average travel time information. In this case, the navigation engine 5 may search the storage structure 4 for the link corresponding to the coordinates or link ID received from the TPEG-CTT location container. If the link is not found, then the navigation engine 5 may determine if there is a matched temporary link entry in the memory 5a. In this search operation, temporarily allocated composite links as well as actual links may be searched. The traffic information for the link and/or the composite link specified by the search operation may be extracted from the corresponding status component included in a CTT component including an ID of 0x80.

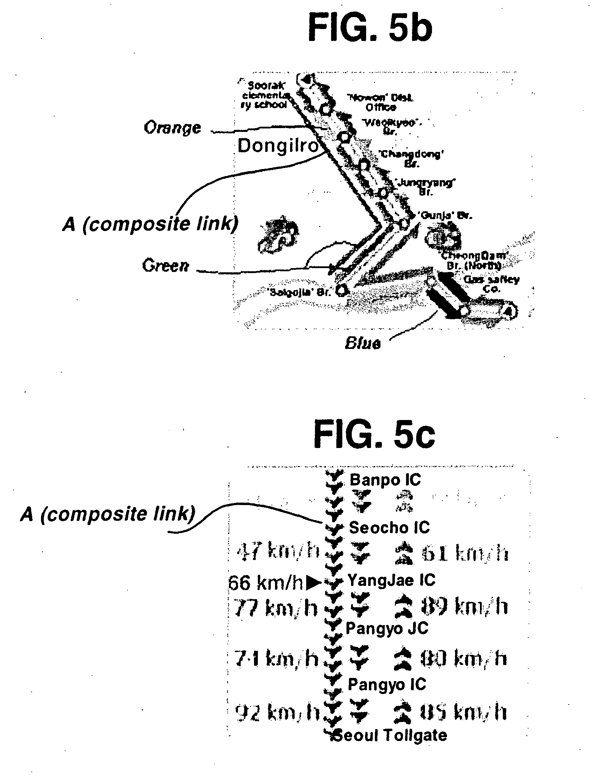

There are various alternative methods for the navigation engine 5 to display traffic information. For example, the navigation engine 5 may show links in different colors according to the average speed in the links as shown in FIGS. 5a and 5b, or may show the average speed with number in each link, as shown in FIG. 5c. In FIGS. 5a and 5b, the red, orange, green, blue colors indicate average speeds of 0-10 km, 10-20 km, 20-40 km, over 40 km, respectively.

If the navigation terminal is not equipped with the storage structure 4 for storing an electronic map, the terminal may show the average speed or the travel time in links located in front of the current position with different colors as shown in FIG. 5b, or with figures as shown in FIG. 5c. If the route of the car with the navigation terminal installed is determined, the navigation terminal may show the average speed in the links included in the determined route instead of the links located in front of the current position.

If the traffic information for a temporary link entry stored in the memory 5a, i.e., a composite link, is received, the navigation engine 5 may display the traffic information for the composite link on a road or graphic near each of the links included in the composite link with colors or with figures, as marked 'A' in FIGS. 5a to 5c. The descriptor for the composite link may also be displayed near the route corresponding to the composite link.

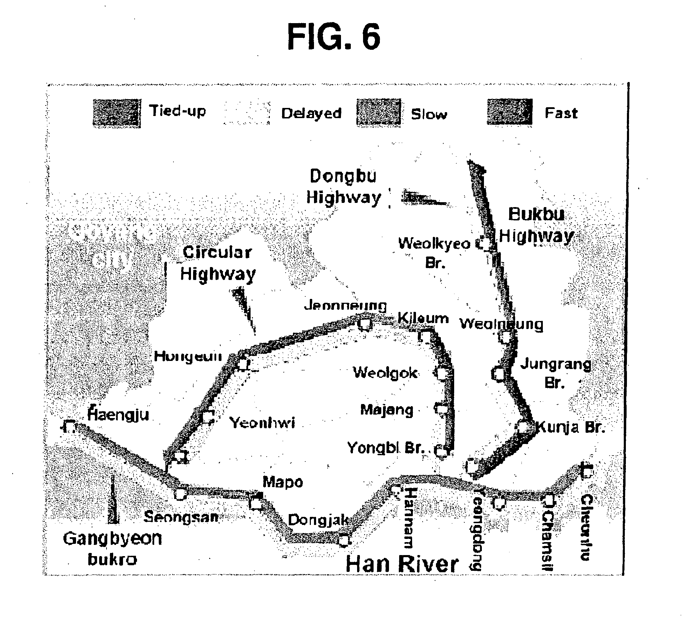

Instead of displaying the traffic information for the composite link together with the traffic information for each of the individual links, the navigation engine 5 may first store the traffic information in the memory 5a in association with the temporary link entry and may display only the traffic information for the composite link as shown in FIG. 6 when the traffic information for the composite link is requested.

If the terminal in FIG. 4 is equipped with a voice output device, the terminal may output received traffic information for a specified link, links, or composite link included in a specified route in voice. If several links included in the specified route are grouped into a composite link and the descriptor in the link allocating sub-component (or description component) shown in FIG. 3b is "xxx", the voice message may be "the average speed in xxx road is nn".

The present disclosure enables a driver to choose the less congested route from among many possible routes.

In the previous discussion, wherever average speed has been referenced, it may be replaced with other status or component based information, such as, for example, travel time.

The foregoing description has been presented for purposes of illustration. Thus, various implementations with improvements, modifications, substitutions, or additions are possible within the scope as defined by the following appended claims.

## Claims

1. A message data structure configured to carry traffic data related to composite road segments comprising a plurality of road segments, the message data structure comprising:
- a first data structure carrying a first information related to an average speed for the composite road segment;
- a second data structure carrying a second information (303) related to the composite road segment with a first identifying information (ID of link) corresponding to the plurality of road segments, wherein the second information includes a second identifying information (ID 0x13) to indicate the inclusion of the second information corresponding to the composite road segment in the message data structure;
- a third data structure carrying a third information relating to a message generation time of the message structure; and
- a fourth data structure carrying a fourth information related to a road type of the composite road segment.

2. The data structure of claim 1, further comprising a data length component.

3. The data structure of claim 1, further comprising a version number component corresponding to information within the composite road segment information.

4. The data structure of claim 1, further comprising an indicator of a number of road segments included in the composite road segment.

5. The data structure of claim 1, further comprising at least one of a traffic tendency on the composite road segment, a predicted or current amount of traffic on the composite road segment, a predicted or current speed on the composite road segment, and a predicted or current time to traverse the composite road segment.

6. The data structure of claim 1, wherein the second information further includes an information corresponding to the descriptor having a name of road segment.

7. The data structure of claim 4, further comprising an indicator of a number of the message data structures.

8. The data structure of claim 1, wherein the second information related to the composite road segment includes a text descriptor associated with the composite road segment.

9. The data structure of claim 1, wherein the first information includes a composite traffic status indicator, wherein the composite traffic status indicator corresponds to the traffic status of the composite road segment or segments included within the composite road segment.

10. The data structure of claim 9, wherein the composite traffic status indicator indicates the traffic status information for a single direction of travel along the composite road segment.

11. The data structure of claim 10, further comprising a supplemental traffic information that includes;
a supplemental composite road segment information identifier to identify that the supplemental traffic information includes supplemental composite road segment information, information identifying the composite road segment as the road segment to which the supplemental composite road segment information relates, and an identifier of at least one additional road segment to be included in the composite road segment and associated with traffic status information for the composite road segment.

12. The data structure of claim 9, wherein the composite traffic status indicator identifies the traffic status information for both directions of travel along the composite road segment.

13. The data structure of claim 12, further comprising a supplemental traffic information, wherein the supplemental composite road segment information identifier to identify the supplemental traffic information includes supplemental composite road segment information, information identifying the composite road segment as the road segment to which the supplemental composite road segment information relates, and a composite travel direction indication indicates whether to enable or disable access to traffic status information for a direction of travel along the composite road segment.

## Patentansprüche

1. Meldungsdatenstruktur, die dafür konfiguriert ist, Verkehrsdaten zu transportieren, die zu zusammengesetzten Straßensegmenten in Beziehung stehen, die mehrere Straßensegmente umfassen, wobei die Meldungsdatenstruktur Folgendes umfasst:
- eine erste Datenstruktur, die erste Informationen transportiert, die zu einer Durchschnittsgeschwindigkeit für das zusammengesetzte Straßensegment in Beziehung stehen;
- eine zweite Datenstruktur, die zweite Informationen (303) transportiert, die zu dem zusammengesetzten Straßensegment in Beziehung stehen, mit ersten identifizierenden Informationen (ID of link), die den mehreren Straßensegmenten entsprechen, wobei die zweiten Informationen zweite identifizierende Informationen (ID 0x13) enthalten, um die Einbindung der zweiten Informationen anzuzeigen, die dem zusammengesetzten Straßensegment in der Meldungsdatenstruktur entsprechen;
- eine dritte Datenstruktur, die dritte Informationen transportiert, die sich auf eine Meldungserzeugungszeit der Meldungsstruktur beziehen; und
- eine vierte Datenstruktur, die vierte Informationen transportiert, die zu einem Straßentyp des zusammengesetzten Straßensegments in Beziehung stehen.

2. Datenstruktur gemäß Anspruch 1, die des Weiteren eine Datenlängenkomponente umfasst.

3. Datenstruktur gemäß Anspruch 1, die des Weiteren eine Versionsnummernkomponente umfasst, die Informationen innerhalb der Informationen über zusammengesetzte Straßensegmente entspricht.

4. Datenstruktur gemäß Anspruch 1, die des Weiteren einen Indikator einer Anzahl von Straßensegmenten umfasst, die in dem zusammengesetzten Straßensegment enthalten sind.

5. Datenstruktur gemäß Anspruch 1, die des Weiteren eine Verkehrstendenz auf dem zusammengesetzten Straßensegment und/oder ein vorhergesagtes oder aktuelles Verkehrsaufkommen auf dem zusammengesetzten Straßensegment und/oder eine vorhergesagte oder aktuelle Geschwindigkeit auf dem zusammengesetzten Straßensegment und/oder eine vorhergesagte oder aktuelle Zeit zum Durchqueren des zusammengesetzten Straßensegments umfasst.

6. Datenstruktur gemäß Anspruch 1, wobei die zweiten Informationen des Weiteren Informationen enthalten, die dem Bezeichner entsprechen, der einen Namen des Straßensegments hat.

7. Datenstruktur gemäß Anspruch 4, die des Weiteren einen Indikator einer Anzahl der Meldungsdatenstrukturen umfasst.

8. Datenstruktur gemäß Anspruch 1, wobei die zweiten Informationen, die zu dem zusammengesetzten Straßensegment in Beziehung stehen, einen Textbezeichner enthalten, der dem zusammengesetzten Straßensegment zugeordnet ist.

9. Datenstruktur gemäß Anspruch 1, wobei die ersten Informationen einen zusammengesetzten Verkehrsstatusindikator enthalten, wobei der zusammengesetzte Verkehrsstatusindikator dem Verkehrsstatus des zusammengesetzten Straßensegments oder der zusammengesetzten Straßensegmente entspricht, die in dem zusammengesetzten Straßensegment enthalten sind.

10. Datenstruktur gemäß Anspruch 9, wobei der zusammengesetzte Verkehrsstatusindikator die Verkehrsstatusinformationen für eine einzelne Fahrtrichtung entlang dem zusammengesetzten Straßensegment anzeigt.

11. Datenstruktur gemäß Anspruch 10, die des Weiteren Zusatzverkehrsinformationen umfasst, die Folgendes enthalten:
einen Identifikator für Zusatzinformationen über das zusammengesetzte Straßensegment, um zu identifizieren, dass die Zusatzverkehrsinformationen Zusatzinformationen über das zusammengesetzte Straßensegment; Informationen, die das zusammengesetzte Straßensegment als das Straßensegment identifizieren, auf das sich die Zusatzinformationen über das zusammengesetzte Straßensegment beziehen; und einen Identifikator von mindestens einem zusätzlichen Straßensegment, das in das zusammengesetzte Straßensegment aufzunehmen ist und Verkehrsstatusinformationen für das zusammengesetzte Straßensegment zugeordnet ist, enthalten.

12. Datenstruktur gemäß Anspruch 9, wobei der zusammengesetzte Verkehrsstatusindikator die Verkehrsstatusinformationen für beide Fahrtrichtungen entlang dem zusammengesetzten Straßensegment identifiziert.

13. Datenstruktur gemäß Anspruch 12, die des Weiteren Zusatzverkehrsinformationen umfasst, wobei der Identifikator für Zusatzinformationen über das zusammengesetzte Straßensegment zum Identifizieren der Zusatzverkehrsinformationen Zusatzinformationen über das zusammengesetzte Straßensegment; Informationen, die das zusammengesetzte Straßensegment als das Straßensegment identifizieren, auf das sich die Zusatzinformationen über das zusammengesetzte Straßensegment beziehen; und eine zusammengesetzte Fahrtrichtungsanzeige, die anzeigt, ob der Zugriff auf Verkehrsstatusinformationen für eine Fahrtrichtung entlang dem zusammengesetzten Straßensegment zu aktivieren oder zu deaktivieren ist, enthält.

## Revendications

1. Structure de données de message configurée pour comporter des données de trafic concernant des segments de route composites comprenant une pluralité de segments de route, la structure de données de message comprenant :
- une première structure de données comportant des premières informations concernant une vitesse moyenne pour le segment de route composite ;
- une seconde structure de données comportant des secondes informations (303) concernant le segment de route composite avec des premières informations d'identification (ID de liaison) correspondant à la pluralité de segments de route, dans lequel les secondes informations comprennent des secondes informations d'identification (ID 0×13) pour indiquer l'inclusion des secondes informations correspondant au segment de route composite dans la structure de données de message;
- une troisième structure de données comportant des troisièmes informations concernant un temps de génération de message de la structure de message ; et
- une quatrième structure de données comportant des quatrièmes informations concernant un type de route du segment de route composite.

2. Structure de données selon la revendication 1, comprenant en outre une composante de longueur de données.

3. Structure de données selon la revendication 1, comprenant en outre une composante de numéro de version correspondant aux informations dans les informations de segment de route composite.

4. Structure de données selon la revendication 1, comprenant en outre un indicateur d'un nombre de segments de route inclus dans le segment de route composite.

5. Structure de données selon la revendication 1, comprenant en outre au moins parmi une d'une tendance de trafic sur le segment de route composite, une quantité prédite ou actuelle de trafic sur le segment de route composite, une vitesse prédite ou actuelle sur le segment de route composite, et un temps prédit ou actuel pour traverser le segment de route composite.

6. Structure de données selon la revendication 1, dans laquelle les secondes informations comprennent en outre des informations correspondant au descripteur ayant un nom de segment de route.

7. Structure de données selon la revendication 4, comprenant en outre un indicateur d'un numéro de structures de données de message.

8. Structure de données selon la revendication 1, dans lequel les secondes informations concernant le segment de route composite comprennent un descripteur de texte associé au segment de route composite.

9. Structure de données selon la revendication 1, dans lequel les premières informations comprennent un indicateur d'état de trafic composite, dans lequel l'indicateur d'état de trafic composite correspond à l'état de trafic du segment de route composite ou des segments compris dans le segment de route composite.

10. Structure de données selon la revendication 9, dans lequel l'indicateur d'état de trafic composite indique les informations d'état de trafic pour une direction unique de déplacement le long du segment de route composite.

11. Structure de données selon la revendication 10, comprenant en outre des informations de trafic supplémentaires qui comprennent :
un identifieur d'informations de segment de route composite supplémentaires pour identifier que les informations de trafic supplémentaires comprennent des informations de segment de route composite supplémentaires, des informations identifiant le segment de route composite comme le segment de route auquel les informations de segment de route composite supplémentaires se rapportent, et un identifieur d'au moins un segment de route supplémentaire à inclure dans le segment de route composite et associé aux informations d'état de trafic pour le segment de route composite.

12. Structure de données selon la revendication 9, dans lequel l'indicateur d'état de trafic composite identifie les informations d'état de trafic pour les deux directions de déplacement le long du segment de route composite.

13. Structure de données selon la revendication 12, comprenant en outre des informations de trafic supplémentaires, dans lequel l'identifieur d'informations de segment de route composite supplémentaires pour identifier les informations de trafic supplémentaires comprend des informations de segment de route composite supplémentaires, des informations identifiant le segment de route composite comme le segment de route auquel les informations de segment de route composite supplémentaires se rapportent, et une indication de direction de déplacement composite indique s'il faut activer ou désactiver l'accès aux informations d'état de trafic pour une direction de déplacement le long du segment de route composite.
